# EUROPÄISCHE PATENTSCHRIFT

(11) **EP 3 093 057 B1**
(45) Veröffentlichungstag und Bekanntmachung des Hinweises auf die Patenterteilung: **26.02.2020**
(21) Anmeldenummer: 16164208.7
(22) Anmeldetag: 07.04.2016
(51) Int. Cl.: B01D 46/00, B01D 46/10, B01D 46/42

(54) **FILTER ZUM EINSETZEN IN EINE FLUIDFÜHRENDE ROHRLEITUNG**
FILTER FOR INSERTION INTO A FLUID-BEARING PIPE
FILTRE DESTINE A L'UTILISATION DANS UNE CONDUITE DE TRANSPORT DE FLUIDE

(30) Priorität: 22.04.2015 DE 102015106190
(43) Veröffentlichungstag der Anmeldung: 16.11.2016
(73) Patentinhaber: Witzenmann GmbH, 75175 Pforzheim (DE)
(72) Erfinder: Kunzmann, Thomas, 75180 Pforzheim (DE); Reuß, Sebastian, 76337 Waldbronn (DE); Ehrenberger, David, 75038 Oberderdingen (DE)
(74) Vertreter: Lemcke, Brommer & Partner Patentanwälte Partnerschaft mbB

(56) Entgegenhaltungen:
- EP-A1- 2 589 423
- WO-A1-2012/000852
- DE-A1-102012 214 609
- FR-A- 1 029 088
- FR-A1- 2 930 278

## Beschreibung

Die Erfindung betrifft ein Filter zum Einsetzen in eine fluidführende Rohrleitung, insbesondere in eine gasführende Rohrleitung im Abgasstrang eines Verbrennungsmotors, nach dem Oberbegriff des Anspruchs 1.

Außerdem betrifft die Erfindung ein Verfahren zum Einsetzen eines Filterelements in eine fluidführende Rohrleitung, insbesondere in eine gasführende Rohrleitung im Abgasstrang eines Verbrennungsmotors, nach dem Oberbegriff des Anspruchs 14.

Ein Filter der vorliegenden Art umfasst ein Trägerrohr und ein flächiges Filterelement, durch welches das Fluid hindurchgeleitet und dabei gefiltert wird. Das Filterelement ist am Trägerrohr fixiert und überdeckt dessen Rohröffnung bzw. dessen lichten Innenquerschnitt, sodass das Fluid gezwungen ist, durch das Filterelement zu strömen.

Filter dieser Art sind aus der DE 10 2011 085 800 A1 oder der EP 2 589 423 A1 bekannt. Die dort offenbarten Filter weisen flächige Filterelemente auf, die eine Rohröffnung des Trägerrohrs überdecken und um einen Endbereich des Trägerrohrs herum nach hinten umgelegt sind. Eine Hülse dient der Fixierung des Filterelements im Endbereich des Trägerrohrs.

Speziell in der EP 2 589 423 A1 ist ein Filter mit einem Trägerrohr beschrieben, das an einem Endbereich nach radial nach innen gebogen ist und an dem das Filterelement über den gesamten Umfang flächig-durchgängig anliegt. Die Hülse ist im Endbereich ebenfalls nach innen gebogen, wobei sie das Filterelement flächig-durchgängig gegen den Endbereich des Trägerrohrs presst.

Ein bevorzugtes Anwendungsgebiet eines Filters in der vorliegenden Art betrifft eine gasführende Rohrleitung im Abgasstrang eines KFZ-Verbrennungsmotors. Speziell wird diese Art von Filter zur Filterung von Keramik- oder Metallpartikeln zum Schutz nachgeschalteter Bauteile in Abgasrückführleitungen verwendet. Dort kommt es durch das Abgas je nach Lastzustand des Verbrennungsmotors regelmäßig zu erheblichen Temperaturschwankungen im Inneren der Rohrleitung. Das Filter umfasst ein Filterelement aus einem vergleichsweise dünnwandigen Metallgewebe oder dgl. mit relativ geringer Masse, weswegen es seine Temperatur vergleichsweise schnell mit der Abgastemperatur ändert, verglichen mit den anderen Bestandteilen des Filters. Diese Temperaturänderungen führen beim Erwärmen zu einem Ausdehnen und beim Abkühlen zu einem Zusammenziehen des Filtermaterials. Gemäß dem Stand der Technik ist das Filterelement fest zwischen dem Trägerrohr und der Hülse eingespannt. Dadurch kann das Filterelement bereits beim Einspannen bei der Montage des Filters beschädigt werden. Zusätzlich hat das Filterelement durch das flächige Einspannen nicht ausreichend Möglichkeit, sich im Zuge der Temperaturänderungen auszudehnen oder zusammenzuziehen. Hierdurch kann es zu einem Wellenaufwurf des Filterelements und im weiteren Verlauf zu Rissen des Filterelements kommen. Dadurch kann das Filter in seiner Funktionalität und seiner Standzeit beeinträchtigt werden.

Der vorliegenden Erfindung liegt die Aufgabe zugrunde, ein Filter zum Einsetzen in eine fluidführende Rohrleitung der eingangs genannten Art anzugeben, das sich gegenüber dem Stand der Technik durch eine höhere Lebensdauer und eine größere Ausfallsicherheit des Filterelements auszeichnet.

Gelöst wird die Aufgabe durch ein Filter mit den Merkmalen des Anspruchs 1 und durch ein Verfahren mit den Merkmalen des Anspruchs 14.

Erfindungsgemäß ist ein Filter zum Einsetzen in eine fluidführende Rohrleitung, umfassend:
ein Trägerrohr mit einem Rohrstutzen, welcher Rohrstutzen einen Endbereich aufweist, welcher Endbereich konisch geformt ist und dessen Wandung zumindest abschnittsweise unter einem zu einer Achse des Rohrstutzens geneigten Winkel verläuft;
einen den Endbereich des Rohrstutzens abschließenden Rand, der nach innen zu der Achse des Rohrstutzens hin umgebogen ist und eine von dem Rand umschriebene Rohröffnung definiert;
ein flächiges Filterelement, das an einer Vorderseite des Trägerrohrs, welche Vorderseite einen Abschluss des Trägerrohrs bildet, fixiert ist, die Rohröffnung des Rohrstutzens überdeckt und im Endbereich des Rohrstutzens zumindest bereichsweise oder in Teilbereichen an dessen Außenfläche anliegt; und eine im Endbereich des Rohrstutzens angeordnete Hülse, welche Hülse über ihren Umfang eine Anzahl an Berührstellen mit dem Filterelement aufweist; dadurch gekennzeichnet, dass
zwischen der Hülse und dem Filterelement zumindest in Teilbereichen des Umfangs ein Luftspalt vorhanden ist, der von den Berührstellen in Richtung zur Vorderseite hin öffnet.

Der Luftspalt kann beispielsweise dadurch erreicht werden, dass ein Abstandselement zwischen dem Filterelement und dem Endbereich des Rohrstutzens angeordnet ist. Eine andere Möglichkeit ist das Vorsehen unterschiedlicher Neigungswinkel von Hülse und Endbereich des Rohrstutzens bezogen auf die Längsachse des Rohrstutzens.

Die mit der Erfindung erzielten Vorteile liegen darin, dass das Filterelement im Gegensatz zum Stand der Technik die Möglichkeit hat, sich aufgrund von Temperaturänderungen auszudehnen und wieder zusammenzuziehen. Die Gefahr von Beschädigungen des Filterelements aufgrund übermäßiger thermischer Beanspruchung ist dadurch verringert.

Insbesondere in Verbindung mit einer Weiterbildung des erfindungsgemäßen Filters, bei der die Hülse zumindest in Teilbereichen ihrer Wandung einen von Null verschiedenen Neigungswinkel bezogen auf die Achse des Rohrstutzens aufweist, der verschieden von dem Neigungswinkel des Endbereichs des Rohrstutzens ist, können die genannten Berührstellen zwischen dem Filterelement und der Hülse, welche Berührstellen sich auch in Umfangsrichtung durchgängig ergänzen können, in axialer Richtung relativ klein ausgebildet sein können, während gleichzeitig die Selbsthemmung der Bauteile unterstützt und damit eine sichere Fixierung des Filterelements am Trägerrohr ermöglicht wird, ohne das Filterelement in seiner thermisch bedingten Bewegung übermäßig zu behindern.

Bei einer weiteren vorteilhaften Ausgestaltung des erfindungsgemäßen Filters ist der Neigungswinkel der Hülse kleiner als der Neigungswinkel des Rohrstutzens. Hierdurch kann eine besonders wirksame Selbsthemmung der Bauteile und eine besonders sichere Fixierung des Filterelements erreicht werden.

Vorzugsweise weist die Hülse mehrere Bereiche mit voneinander verschiedenen Neigungswinkeln bezogen auf die Achse des Rohrstutzens und/oder mit voneinander verschiedenen Radien auf. Damit lässt sich der Luftspalt zwischen der Hülse und dem Filterelement hinsichtlich seiner Abmessung anpassen, insbesondere vergrößern, ohne den Gesamtdurchmesser der Rohrleitung zu erhöhen, was insbesondere im Hinblick auf den knappen Bauraum in einem Kraftfahrzeug von Vorteil sein kann.

Besonders bevorzugt weist die Hülse im Bereich der Vorderseite eine nach innen gerichtete Umbiegung auf. Dadurch lässt sich ein Schutz des Filterelements vor ungewollter mechanischer Schadeinwirkung realisieren, und eine etwaige Beschädigung des Filterelements wird verhindert, ohne dabei das Filtervermögen des Filters negativ zu beeinflussen.

Zwischen dem Neigungswinkel der Hülse und dem Neigungswinkel des Endbereichs des Rohrstutzens kann ein Winkelunterschied zwischen etwa 0,1° und etwa 15°, bevorzugt zwischen etwa 2° und etwa 8°, besonders bevorzugt zwischen etwa 3° und etwa 5°, höchst vorzugsweise etwa 4°, bestehen. Die Neigungswinkel können im Hinblick auf eine maximierte Selbsthemmung gewählt sein, welche sich aus einer geeigneten Kombination von materialtechnischen und geometrischen Parametern im Endbereich des Rohrstutzens, des Filterelements und der Hülse ergibt.

In einer vorteilhaften Ausführungsform liegt die Hülse in axialer Richtung auf ihrer der Vorderseite abgewandten Seite an einer vorzugsweise umlaufenden Wellenschulter des Trägerrohrs an. Damit werden eine einfache axiale Positionierbarkeit der Hülse und gleichzeitig eine Absicherung gegen ein übermäßiges Aufgleiten der Hülse auf den Endbereich des Rohrstutzens sichergestellt.

Bevorzugt kann als zusätzliche Verbindung zwischen Hülse, Filterelement und dem Endbereich des Rohrstutzens an der Hülse eine stoffschlüssige Verbindung, beispielsweise in Form von Schweißpunkten, vorgesehen sein. Diese zusätzliche Verbindung dient einer zusätzlichen Sicherung der Fixierung des Filterelements für den Fall, dass die Selbsthemmung allein noch nicht ausreichend ist, und sorgt für eine dauerhafte Fixierung.

Bevorzugt sind das Filterelement, die Hülse, das Trägerrohr und der Rohrstutzen des Trägerrohrs in einem metallischen Werkstoff, insbesondere Stahl, vorzugsweise Edelstahl, ausgebildet. Edelstahl genügt hohen Anforderungen bezüglich der thermischen Stabilität, ist darüber hinaus formstabil, gut verarbeitbar und reagiert nicht mit den in der Rohrleitung geführten Fluiden.

Das Filterelement kann ein- oder mehrlagig als Textil, insbesondere als Gewebe, Gestricke und/oder Gewirk, vorzugsweise aus Metalldrähten, oder als Metallvlies gefertigt sein. Zusätzlich kann das Filterelement auf einem Stützgitter aus Metall, insbesondere einem Lochblech, angeordnet sein. Gegebenenfalls vorhandene offene Drahtenden des Filterelements können durch die erfindungsgemäß vorgeschlagene Verpressung bzw. Klemmung eingebunden werden, sodass sie sich nicht auf der Abgangsseite bzw. der stromabwärtigen Seite des Filters befinden. Das Filter kann auch mit einer katalytischen Beschichtung versehen sein, wie sie in EP 2 585 703 B1 beschrieben ist. Dies trägt zu einer verbesserten Wirksamkeit des Filters bei.

Ein anderer Aspekt der Erfindung betrifft ein Verfahren zum Einsetzen eines Filterelements in eine fluidführende Rohrleitung, welche Rohrleitung umfasst: ein Trägerrohr mit einem Rohrstutzen, welcher Rohrstutzen einen Endbereich aufweist, welcher Endbereich konisch geformt ist und dessen Wandung zumindest abschnittsweise unter einem zu einer Achse des Rohrstutzens geneigten Winkel verläuft; einen den Endbereich des Rohrstutzens abschließenden Rand, der nach innen zu der Achse des Rohrstutzens hin umgebogen ist und eine von dem Rand umschriebene Rohröffnung definiert; sowie ein flächiges Filterelement, das an einer Vorderseite des Trägerrohrs, welche Vorderseite einen Abschluss des Trägerrohrs bildet, fixiert ist und die Rohröffnung des Rohrstutzens überdeckt und im Endbereich des Rohrstutzens an dessen Außenfläche zumindest in Teilbereichen anliegt; welches Verfahren sich dadurch auszeichnet, dass eine Hülse, die zumindest in Teilbereichen ihrer Wandung einen von Null verschiedenen Neigungswinkel bezogen auf eine Achse des Rohrstutzens aufweist, der verschieden von dem Neigungswinkel des Endbereichs des Rohrstutzens ist, axial auf den Endbereich des Rohrstutzens und das den Endbereich des Rohrstutzens überdeckende Filterelement aufgebracht wird, sodass sie über den Umfang eine Anzahl an Berührstellen mit dem Filterelement ausbildet und durch die entstehende Verpressung eine radiale Kraft auf den Endbereich des Rohrstutzens und das im Endbereich des Rohrstutzens an dessen Außenfläche anliegende Filterelement ausgeübt wird. Die Hülse kann weitere Merkmale aufweisen, wie sie oben im Zusammenhang mit dem Filter beschrieben wurden. In jedem Fall wird die Hülse derart aufgebracht, dass zwischen der Hülse und dem Filterelement zumindest in Teilbereichen des Umfangs ein Luftspalt vorhanden ist, der von den Berührstellen in Richtung zur Vorderseite hin öffnet.

Dieses Verfahren gestaltet sich besonders vorteilhaft, da es ohne den Einsatz eines speziellen Werkzeugs durchgeführt wird und zu einer effizienten Fixierung des Filterelements führt, ohne dass notwendigerweise geschweißt oder zusätzlich verpresst werden muss, was sich zeit- und kostenmäßig günstig auswirkt.

Vorzugsweise gleitet die Hülse dabei in axialer Richtung auf ihrer der Vorderseite abgewandten Seite gegen eine vorzugsweise umlaufende Wellenschulter des Trägerrohrs auf. Durch die dadurch definierte axiale Endposition der Hülse erleichtert sich die Montage des Filters.

Weitere Vorteile und Eigenschaften der Erfindung ergeben sich aus der folgenden Beschreibung von Ausführungsbeispielen anhand der Zeichnung.
Fig. 1 zeigt ein erfindungsgemäßes Filter gemäß einer ersten Ausgestaltung im Längsschnitt;
Fig. 2 zeigt das Detail A aus Fig. 1 gemäß einer ersten Variante;
Fig. 3 zeigt das Detail A aus Fig. 1 gemäß einer zweiten Variante;
Fig. 4 zeigt das Detail A aus Fig. 1 gemäß einer dritten Variante;
Fig. 5 zeigt das Detail A aus Fig. 1 gemäß einer vierten Variante;
Fig. 6 zeigt das Detail A aus Fig. 1 gemäß einer fünften Variante;
Fig. 7 zeigt ein illustratives, nicht erfindungsgemäßes Filter im Längsschnitt;
Fig. 8 zeigt ein illustratives, nicht erfindungsgemäßes Filter im Längsschnitt; und
Fig. 9 zeigt eine Ausführungsform des Filters gemäß Fig. 8 im Querschnitt.

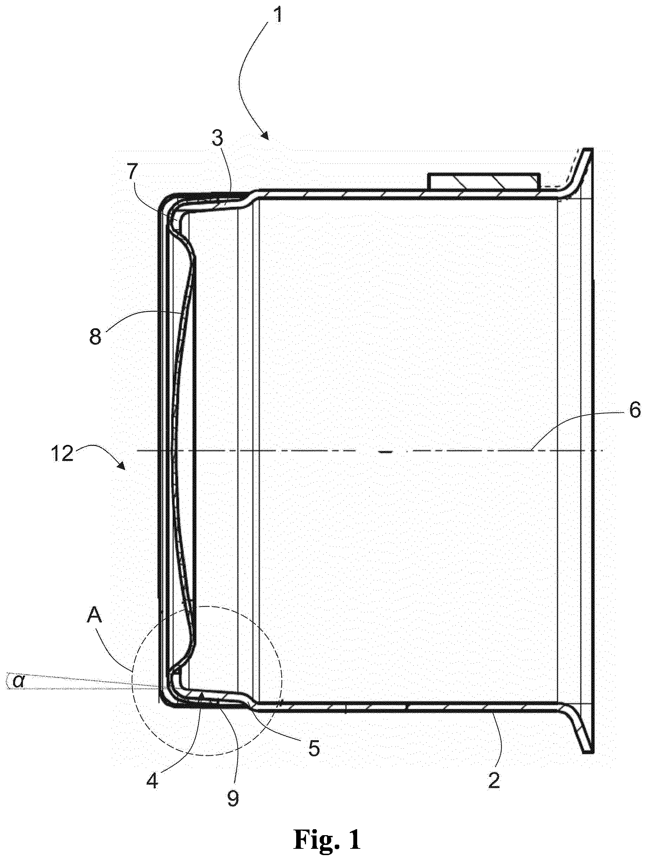

In Figur 1 ist ein Längsschnitt durch ein Filter 1 gezeigt, welches Filter 1 ein Trägerrohr 2 mit einem endständigen Rohrstutzen 3 umfasst, welcher Rohrstutzen 3 einstückig mit dem Trägerrohr 2 ausgebildet ist. Im Übergang zu einem Endbereich 4 des Rohrstutzens 3 ist eine Wellenschulter 5 angeordnet, welche eine radiale Erstreckungskomponente bezogen auf eine Längsachse 6 des Trägerrohrs 2 bzw. des Rohrstutzens 3 aufweist. Der Endbereich 4 des Rohrstutzens 3 ist konisch geformt und weist einen Neigungswinkel *α* gegenüber der Längsachse 6 des Trägerrohrs 2 auf, welcher Neigungswinkel *α* etwa 4° beträgt. Ein vorderseitiger Rand 7 des Endbereichs 4 ist nach innen in Richtung der Längsachse 6 des Trägerrohrs 2 umgebogen und definiert eine Rohröffnung. Über den Endbereich 4 des Rohrstutzens 3 ist ein Filterelement 8 gelegt, welches den gesamten lichten Querschnitt des Trägerrohrs 2 bzw. die genannte Rohröffnung abdeckt. Das Filterelement 8 weist in seinem zentralen Bereich eine Auswölbung in Richtung der angesprochenen Vorderseite 12 der Anordnung (in Figur 1 links) auf. Von der Vorderseite 12 aus gesehen hinter dem Filterelement 8 kann ein Stützgitter aus Metall, insbesondere ein Lochblech, oder dgl. (nicht dargestellt bzw. bezeichnet) angeordnet sein.

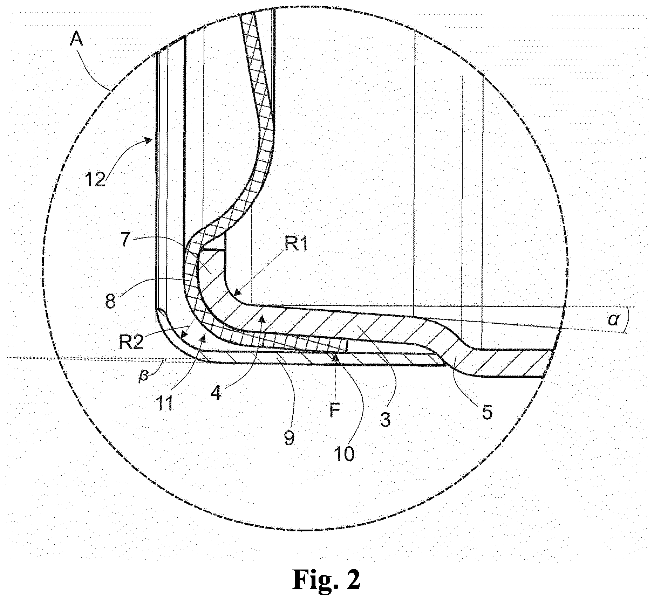

Wie aus der Detailansicht bei Bezugszeichen A in Figur 2 genauer hervorgeht, ist eine Hülse 9 um den Endbereich 4 des Rohrstutzens 3 herum angeordnet, welche Hülse 9 im vorliegenden Ausführungsbeispiel eine in Umfangsrichtung durchgängige Berührstelle (Berührlinie) 10 mit dem Filterelement 8 aufweist. Zusätzlich liegt die Hülse 9 in axialer Richtung an der Wellenschulter 5 des Rohrstutzens 3 an. Hierdurch sowie aufgrund der durch das Aufgleiten der Hülse 9 auf den Endbereich 4 des Rohrstutzens 3 bzw. das Filterelement 8 bewirkten Selbsthemmung zwischen Filterelement 8 und Hülse 9 ist letztere axial fixiert. Zugleich übt die Hülse 9 in radialer Richtung eine Klemmkraft F auf das Filterelement 8 aus, um dieses in der gezeigten Anordnung zu fixieren. Die Hülse 9 bzw. deren Wandung ist in dem dargestellten Montagezustand um einen Neigungswinkel *β* von etwa 0,5° gegen die Längsachse 6 des Trägerrohrs 2 geneigt.

Auf der Vorderseite 12 (im linken Teil der Darstellung) ist die Hülse 9 nach innen in Richtung der Achse 6 des Trägerrohrs 2 umgebogen und weist einen Biegungsradius R2 auf, der verschieden ist von dem Biegungsradius R1 des Filterelements 8 bzw. des Rohrstutzens 3, an dem das Filterelement 8 anliegt. Hierdurch und aufgrund der verschiedenen Neigungswinkel *α*, *β* ist ein umlaufender Luftspalt 11 zwischen dem Filterelement 8 und der Hülse 9 gebildet, welcher zur Richtung der Vorderseite 12 hin öffnet.

Im vorliegenden Ausführungsbeispiel erzeugt die Hülse 9 aufgrund der Neigungswinkeldifferenz bezogen auf den Rohrstutzen 3 durch Selbsthemmung die bereits erwähnte radiale Klemmkraft F auf das Filterelement 8 und den Endbereich 4 des Rohrstutzens 3, wodurch das Filterelement 8 am Trägerrohr 2 fixiert ist. Der Luftspalt 11 sorgt dafür, dass sich das Filterelement 8 bei thermisch induzierter Verformung ohne Beschädigung relativ frei bewegen kann.

Das in den Figuren 1 und 2 dargestellte Filter 1 ist zum Einsetzen in eine Rohrleitung mit kreisförmigem Querschnitt für die Abgasrückführung bei einem KFZ-Verbrennungsmotor ausgelegt. Dementsprechend ist auch das Trägerrohr 2 im Wesentlichen kreiszylindrisch ausgebildet, und die Hülse 9 definiert eine kreisrunde Öffnung. Es sind jedoch auch andere Formen, insbesondere andere Querschnittsformen, im Rahmen der vorliegenden Erfindung realisierbar.

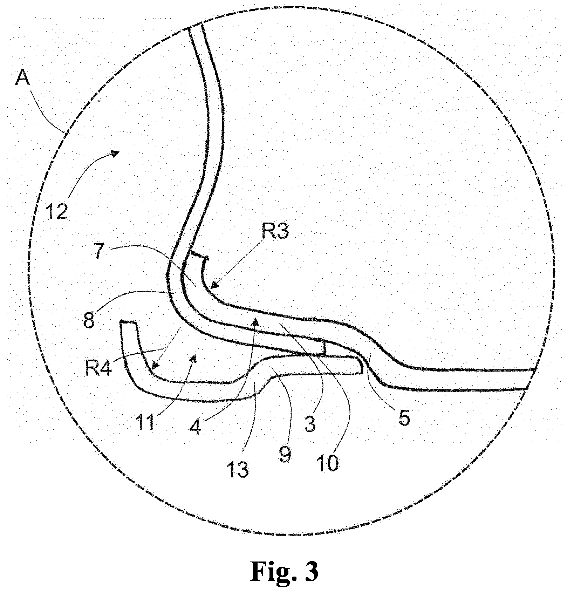

In Figur 3 ist eine Variante des erfindungsgemäßen Filters 1 im Bereich A dargestellt, wobei sich der Unterschied zur Ausgestaltung in Figur 2 insbesondere aus der Form der Hülse 9 ergibt. Die Hülse 9 ist gemäß Figur 3 mit einer nach außen verlaufenden Wellenschulter 13 versehen, die über eine (lokale) Querschnitterweiterung eine Vergrößerung bzw. Verbreiterung des Luftspaltes 11 zwischen Filterelement 8 und Hülse 9 zur Vorderseite 12 hin ermöglicht. Der Gesamtdurchmesser der Rohrleitung wird dabei nicht vergrößert. Der Biegungsradius R4 der Hülse 9 und der Biegungsradius R3 im Endbereich 4 des Rohrstutzens 3 sowie des Filterelements 8 sind in der vorliegenden Ausführungsform verschieden von den Biegeradien R1 und R2 aus Figur 2. Es liegt aber im Rahmen der Erfindung, dieselben Biegeradien wie in Figur 2 zu verwenden. Im vorliegenden Ausführungsbeispiel ist die Hülse 9 von der Wellenschulter 5 des Rohrstutzens 3 leicht beabstandet dargestellt. Dem Fachmann erschließt sich aber, dass die Hülse 9 auch an der Wellenschulter 5 anliegen kann.

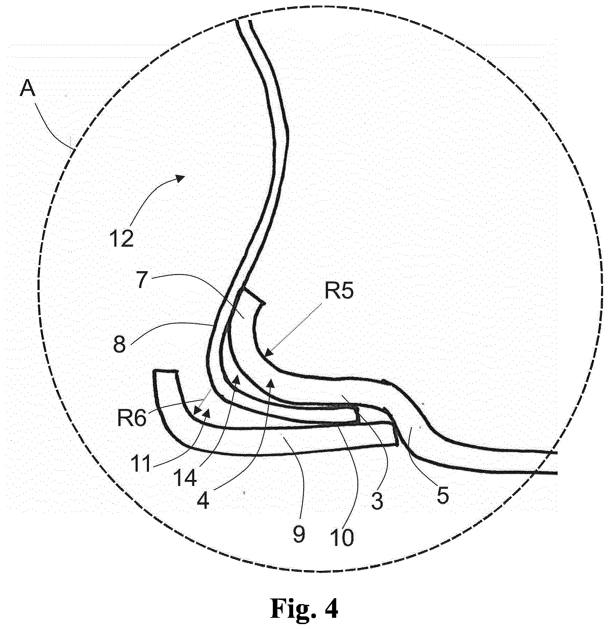

In Figur 4 ist eine dritte Variante des erfindungsgemäßen Filters 1 dargestellt, wobei sich der Unterschied zur Ausgestaltung gemäß Figur 2 insbesondere aus der Gestaltung des Biegungsradius R5 des Endbereichs 4 des Rohrstutzens 3 ergibt. Der Biegungsradius R5 ist so gewählt, dass das Filterelement 8 nicht durchgängig im Endbereich 4 des Rohrstutzens 3 an diesem anliegt, sondern einen zusätzlichen Luftspalt 14 bildet, der sich zwischen dem Filterelement 8 und dem Endbereich 4 des Rohrstutzens 3 erstreckt. Dieser zusätzliche Luftspalt 14 schafft zusätzlichen Freiraum für das Filterelement 8 beim Expandieren und Kontrahieren und erhöht damit die Ausfallsicherheit des Filterelements 8 weiter. Der Biegungsradius R6 der Hülse 9 ist in der vorliegenden Ausführungsform verschieden von dem Biegeradius R2 der Hülse 9 aus Figur 2. Es liegt aber im Rahmen der Erfindung, denselben Biegeradius zu verwenden. Im vorliegenden Ausführungsbeispiel liegt die Hülse 9 an der Wellenschulter 5 des Rohrstutzens 3 an. Alternativ ist eine axiale Beabstandung der Hülse 9 von der Wellenschulter 5 möglich, wie in Figur 4 exemplarisch gezeigt.

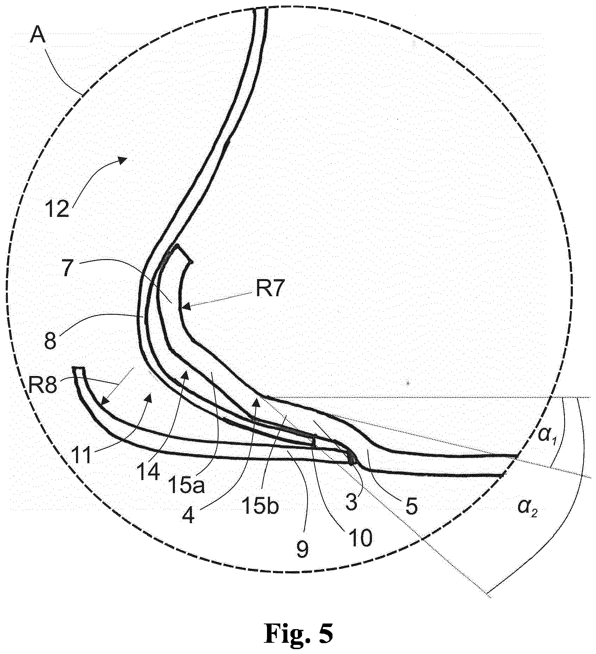

In Figur 5 ist eine vierte Variante des erfindungsgemäßen Filters 1 dargestellt, wobei der wesentliche Unterschied zur Ausgestaltung gemäß Figur 4 darin besteht, dass der Endbereich 4 des Rohrstutzens 3 zwei konisch geformte Teilbereiche oder Teilabschnitte 15a, 15b aufweist, wobei der Neigungswinkel *α₁* der Wandung im Teilbereich 15a größer ist als der Neigungswinkel *α₂* der Wandung im Teilbereich 15b. Hierdurch wird erreicht, dass der zusätzliche Luftspalt 14 größer ist als bei der zuvor beschriebenen Ausgestaltung des Filters gemäß Figur 4. Der Biegungsradius R8 der Hülse 9 und der Biegungsradius R7 des Endbereichs 4 des Rohrstutzens 3 sowie des Filterelements 8 sind in der vorliegenden Ausführungsform verschieden von den Biegeradien R1 und R2 aus Figur 2. Es liegt aber im Rahmen der Erfindung, dieselben Biegeradien zu verwenden.

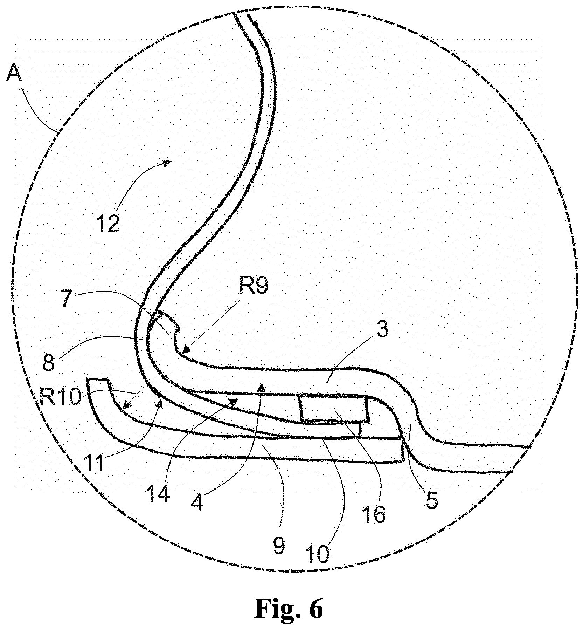

In Figur 6 ist eine fünfte Variante des Filters 1 dargestellt, die sich von der Ausführungsform in Figur 2 im Wesentlichen dadurch unterscheidet, dass ein zusätzliches Abstandselement 16 zwischen dem Filterelement 8 und dem Endbereich 4 des Rohrstutzens 3 angeordnet ist. Dieses Abstandselement 16 hat den Zweck, einen zusätzlichen Luftspalt 14 zwischen dem Filterelement 8 und der Hülse 9 zu schaffen. Die damit verbundenen Vorteile wurden zuvor bereits genannt.

Bei der Ausgestaltung gemäß Figur 6 erfolgt die Fixierung des Filterelements 8 vorzugsweise dergestalt, dass die Hülse 9 mit gewissem radialem Übermaß auf den Rohrstutzen 3 bzw. das Filterelement 8 aufgeschoben und dann durch radiale Krafteinwirkung (mechanisch oder elektromagnetisch) verpresst bzw. eingezogen wird.

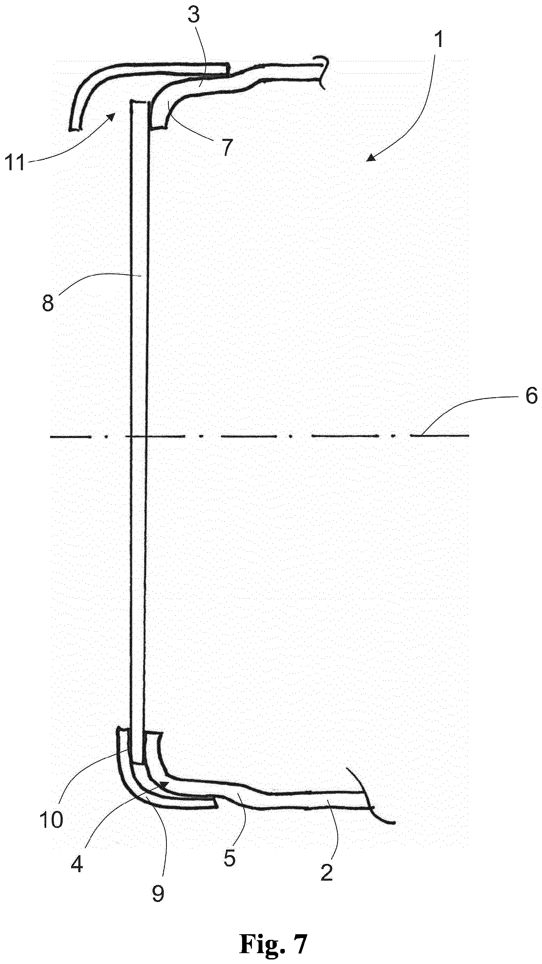

In Figur 7 ist ein illustratives, nicht erfindungsgemäßes Filter 1 dargestellt, bei dem die Hülse 9 nur in einem Teilbereich des Umfangs des Rohrstutzens 3 (unten in Figur 7) eine Berührstelle 10 mit dem Filterelement 8 aufweist. Im gezeigten Ausführungsbeispiel ist das Filterelement 8 nicht vollständig um die Umbiegung des Endbereichs 4 des Rohrstutzens 3 gelegt, was jedoch in einer alternativen Ausführungsform der Fall sein kann. In einem anderen Teilbereich (oben in Figur 7) des Rohrstutzens 3 ist die Hülse 9 derart ausgebildet, dass sie keine Berührstelle 10 mit dem Filterelement 8 aufweist. Vielmehr ist die Hülse 9 von dem Filterelement 8 beabstandet, sodass ein Luftspalt 11 ausgebildet ist, der dem Filterelement 8 Raum zum Expandieren und Kontrahieren lässt.

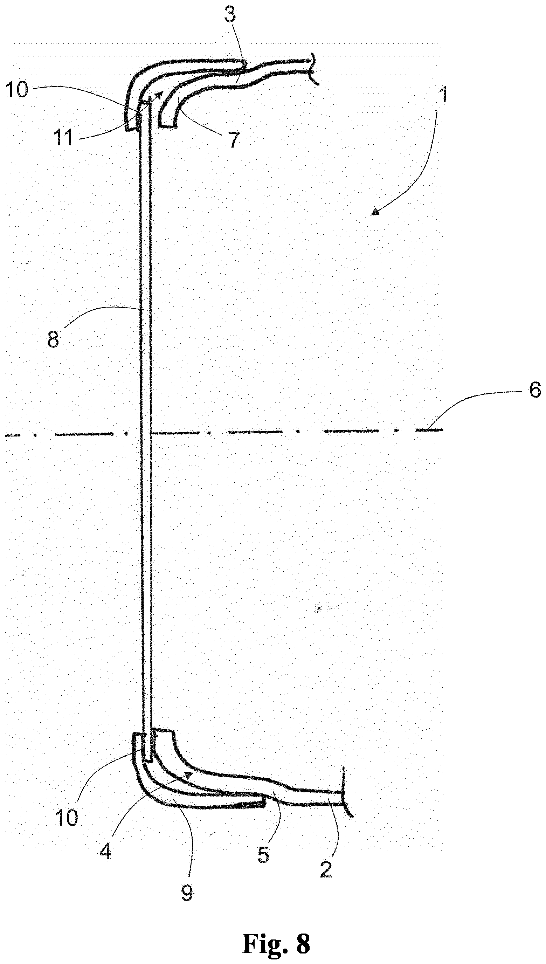

In Figur 8 ist ein illustratives, nicht erfindungsgemäßes Filter 1 dargestellt, bei welchem die Hülse 9 derart ausgestaltet oder angeordnet ist, dass sie über den gesamten Umfang des Rohrstutzens 3 eine Berührstelle 10 mit dem Filterelement 8 aufweist. Der Endbereich 4 des Rohrstutzens 3 ist dagegen so geformt, dass das Filterelement 8 nur in Teilbereichen (unten in Figur 8) an dem Endbereich 4 des Rohrstutzens 3 angelegt ist. Hierdurch ergibt sich in denjenigen Teilbereichen, in denen das Filterelement 8 nicht an dem Rohrstutzen angelegt ist, ein Luftspalt 11.

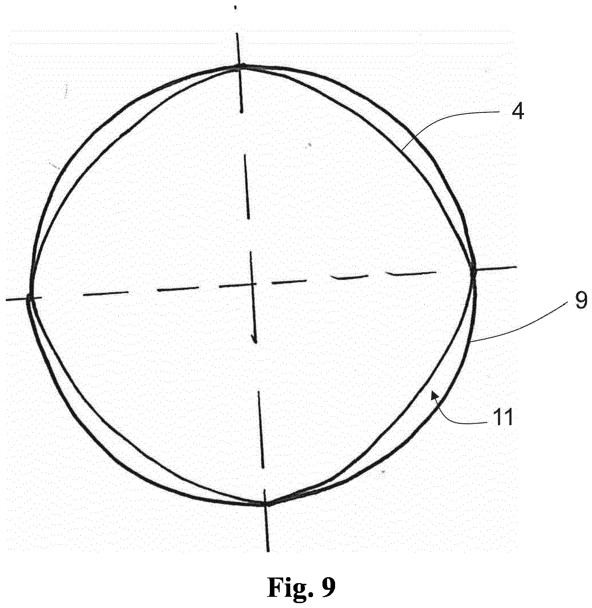

In Figur 9 ist eine Ausführungsform mit vier über den Umfang verteilten Berührstellen zwischen der Hülse 9 und dem Endbereich 4 des Rohrstutzens 3 exemplarisch dargestellt. Zwischen dem Endbereich 4 des Rohrstutzens 3 und dem Filterelement 8 ist der bzw. sind die zuvor beschriebene(n) Luftspalt(e) 11 zu erkennen.

Zur Herstellung des Filters 1 insbesondere gemäß Figur 1 bzw. dessen gezeigten Varianten wird verfahrensgemäß vorzugsweise die Hülse 9, die zumindest in Teilbereichen ihrer Wandung einen von Null verschiedenen Neigungswinkel *β* bezogen auf eine Achse (Längsachse 6) des Rohrstutzens 3 aufweist, der verschieden von dem Neigungswinkel *α* des Endbereichs 4 des Rohrstutzens 3 ist, in axialer Richtung (von links nach rechts) auf den Endbereich 4 des Rohrstutzens 3 und das den Endbereich 4 des Rohrstutzens 3 überdeckende Filterelement 8 aufgebracht bzw. aufgeschoben, insbesondere bis gegen die Wellenschulter 5, sodass sie über den Umfang eine Anzahl an Berührstellen 10 mit dem Filterelement 8 ausbildet. Durch die entstehende Verpressung wirkt eine radiale Klemmkraft F auf den Endbereich 4 des Rohrstutzens 3 und das im Endbereich 4 des Rohrstutzens 3 an dessen Außenfläche anliegende Filterelement 8, um dieses zu fixieren.

Speziell bei der Ausgestaltung gemäß Figur 6 kann ein alternatives Verfahren zum Einsatz kommen, wonach eine Hülse 9, die ein radiales Übermaß bezogen auf das im Endbereich 4 des Rohrstutzens 3 an dessen Außenfläche anliegende Filterelement 8 aufweist, in dem Endbereich 4 des Rohrstutzens 3 im Bereich des Filterelements 8 angeordnet wird und anschließend eine Verringerung ihres Durchmessers durch radiales Einziehen erfährt, sodass die Hülse 9 anschließend eine im Wesentlichen rein radial wirksame Kraft auf das Filterelement 8 ausübt, um dieses zu fixieren.

## Patentansprüche

1. Filter (1) zum Einsetzen in eine fluidführende Rohrleitung, umfassend:
ein Trägerrohr (2) mit einem Rohrstutzen (3), welcher Rohrstutzen einen Endbereich (4) aufweist, welcher Endbereich (4) konisch geformt ist und dessen Wandung zumindest abschnittsweise unter einem zu einer Achse (6) des Rohrstutzens (3) geneigten Winkel (α) verläuft;
einen den Endbereich (4) des Rohrstutzens (3) abschließenden Rand (7), der nach innen zu der Achse (6) des Rohrstutzens (3) hin umgebogen ist und eine von dem Rand (7) umschriebene Rohröffnung definiert;
ein flächiges Filterelement (8), das an einer Vorderseite (12) des Trägerrohrs (2), welche Vorderseite (12) einen Abschluss des Trägerrohrs (2) bildet, fixiert ist, die Rohröffnung des Rohrstutzens (3) überdeckt und im Endbereich (4) des Rohrstutzens (3) zumindest bereichsweise an dessen Außenfläche anliegt; und
eine im Endbereich (4) des Rohrstutzens (3) angeordnete Hülse (9), welche Hülse (9) über ihren Umfang eine Anzahl an Berührstellen (10) mit dem Filterelement (8) aufweist;
**dadurch gekennzeichnet, dass**
zwischen der Hülse (9) und dem Filterelement (8) zumindest in Teilbereichen des Umfangs ein Luftspalt (11) vorhanden ist, der von den Berührstellen (10) in Richtung zur Vorderseite (12) hin öffnet.

2. Filter (1) nach Anspruch 1, **dadurch gekennzeichnet, dass** die Hülse (9) zumindest in Teilbereichen ihrer Wandung einen von Null verschiedenen Neigungswinkel (β) bezogen auf die Achse (6) des Rohrstutzens (3) aufweist, der verschieden von dem Neigungswinkel (α) des Endbereichs (4) des Rohrstutzens (3) ist.

3. Filter (1) nach Anspruch 1 oder 2, **dadurch gekennzeichnet, dass** der Neigungswinkel (β) der Hülse (9) kleiner als der Neigungswinkel (α) des Rohrstutzens (3) ist.

4. Filter (1) nach einem der vorangegangenen Ansprüche, **dadurch gekennzeichnet, dass** die Hülse (9) mehrere Bereiche mit voneinander verschiedenen Neigungswinkeln (α₁, α₂) bezogen auf die Achse (6) des Rohrstutzens (3) und/oder mit voneinander verschiedenen Radien aufweist.

5. Filter (1) nach einem der vorangegangenen Ansprüche, **dadurch gekennzeichnet, dass** die Hülse (9) im Bereich der Vorderseite (12) eine nach innen gerichtete Umbiegung aufweist.

6. Filter (1) nach einem der vorangegangenen Ansprüche, **dadurch gekennzeichnet, dass** zwischen dem Neigungswinkel (β) der Hülse (9) und dem Neigungswinkel (α) des Endbereichs (4) des Rohrstutzens (3) ein Winkelunterschied zwischen etwa 0,1° und etwa 15°, bevorzugt zwischen etwa 2° und etwa 8°, besonders bevorzugt zwischen etwa 3° und etwa 5°, höchst vorzugsweise etwa 4°, besteht.

7. Filter (1) nach einem der vorangegangenen Ansprüche, **dadurch gekennzeichnet, dass** das Trägerrohr (2) eine vorzugsweise umlaufende Wellenschulter (5) als Anschlag für die Hülse (9) aufweist, an der vorzugsweise die Hülse (9) in axialer Richtung auf ihrer der Vorderseite (12) abgewandten Seite anliegt.

8. Filter (1) nach einem der vorangegangenen Ansprüche, **dadurch gekennzeichnet, dass** zwischen Hülse (9), Filterelement (8) und Rohrstutzen (3) als zusätzliche Verbindung wenigstens eine stoffschlüssige Verbindung vorgesehen ist, vorzugsweise in Form wenigstens eines Schweißpunkts.

9. Filter (1) nach einem der vorangegangenen Ansprüche, **dadurch gekennzeichnet, dass** das Filterelement (8), die Hülse (9), das Trägerrohr (2) und der Rohrstutzen (3) in einem metallischen Werkstoff, insbesondere Stahl, vorzugsweise Edelstahl, ausgebildet sind.

10. Filter (1) nach einem der vorangegangenen Ansprüche, **dadurch gekennzeichnet, dass** das Filterelement (8), die Hülse (9), das Trägerrohr (2) und/oder der Rohrstutzen (3) unterschiedliche Wärmeausdehnungseigenschaften aufweisen.

11. Filter (1) nach einem der vorangegangenen Ansprüche, **dadurch gekennzeichnet, dass** das Filterelement (8) im Wesentlichen aus einem Metallvlies hergestellt ist.

12. Filter (1) nach einem der vorangegangenen Ansprüche, **dadurch gekennzeichnet, dass** das Filterelement (8) ein- oder mehrlagig als Gewebe, Gestricke und/oder Gewirk, vorzugsweise aus Metalldrähten, gefertigt ist.

13. Filter (1) nach einem der vorangegangenen Ansprüche, **dadurch gekennzeichnet, dass** das Filterelement (8) auf einem Stützgitter aus Metall, insbesondere einem Lochblech, angeordnet ist.

14. Verfahren zum Einsetzen eines Filterelements (8) in eine fluidführende Rohrleitung, die Rohrleitung umfassend:
ein Trägerrohr (2) mit einem Rohrstutzen (3), welcher Rohrstutzen (3) einen Endbereich (4) aufweist, welcher Endbereich (4) konisch geformt ist und dessen Wandung zumindest abschnittsweise unter einem zu einer Achse des Rohrstutzens (3) geneigten Winkel (α) verläuft;
einen den Endbereich (4) des Rohrstutzens (3) abschließenden Rand, der nach innen zu der Achse des Rohrstutzens (3) hin umgebogen ist und eine von dem Rand umschriebene Rohröffnung definiert; sowie
ein flächiges Filterelement (8), das an einer Vorderseite des Trägerrohrs (2), welche Vorderseite einen Abschluss des Trägerrohrs (2) bildet, fixiert ist und die Rohröffnung des Rohrstutzens (3) überdeckt und im Endbereich (4) des Rohrstutzens (3) zumindest in Teilbereichen an dessen Außenfläche anliegt; **dadurch gekennzeichnet, dass**
eine Hülse (9), die zumindest in Teilbereichen ihrer Wandung einen von Null verschiedenen Neigungswinkel (*β*) bezogen auf eine Achse des Rohrstutzens (3) aufweist, der verschieden von dem Neigungswinkel (α) des Endbereichs (4) des Rohrstutzens (3) ist, axial auf den Endbereich (4) des Rohrstutzens (3) und das den Endbereich (4) des Rohrstutzens (3) überdeckende Filterelement (8) aufgebracht wird, sodass sie über den Umfang eine Anzahl an Berührstellen (10) mit dem Filterelement (8) ausbildet und durch die entstehende Verpressung eine radiale Kraft F auf den Endbereich (4) des Rohrstutzens (3) und das im Endbereich (4) des Rohrstutzens (3) an dessen Außenfläche anliegende Filterelement (8) ausgeübt wird,
wobei die Hülse derart aufgebracht wird, dass zwischen der Hülse (9) und dem Filterelement (8) zumindest in Teilbereichen des Umfangs ein Luftspalt (11) vorhanden ist, der von den Berührstellen (10) in Richtung zur Vorderseite (12) hin öffnet.

15. Verfahren nach Anspruch 14, **dadurch gekennzeichnet, dass** die Hülse (9) beim Aufbringen in axialer Richtung auf ihrer der Vorderseite abgewandten Seite gegen eine vorzugsweise umlaufende Wellenschulter (5) des Trägerrohrs (2) angeordnet wird.

## Claims

1. Filter (1) for insertion into a fluid-conducting pipeline, comprising:
a carrier pipe (2) having a pipe neck (3), which pipe neck has an end region (4), which end region (4) is conical in shape and the wall of which at least in some portions runs at an angle (α) inclined with respect to an axis (6) of the pipe neck (3);
a rim (7) terminating the end region (4) of the pipe neck (3), which rim is bent inwards towards the axis (6) of the pipe neck (3) and defines a pipe-opening circumscribed by the rim (7);
a planar filter element (8) which is fixed to a front side (12) of the carrier pipe (2), which front side (12) forms a termination of the carrier pipe (2), and which planar filter element covers the pipe-opening of the pipe neck (3) and in the end region (4) of the pipe neck (3) at least in some regions rests against the outer surface thereof; and
a sleeve (9) arranged in the end region (4) of the pipe neck (3), which sleeve (9) has over its circumference a number of contact points (10) with the filter element (8);
**characterised in that**
there is an air-gap (11) between the sleeve (9) and the filter element (8), at least in sub-regions of the circumference, which air-gap opens from the contact points (10) in the direction towards the front side (12).

2. Filter (1) according to claim 1, **characterised in that** the sleeve (9), at least in sub-regions of its wall, has an angle of inclination (β) other than zero with respect to the axis (6) of the pipe neck (3), which angle of inclination (β) is different from the angle of inclination (α) of the end region (4) of the pipe neck (3).

3. Filter (1) according to claim 1 or 2, **characterised in that** the angle of inclination (β) of the sleeve (9) is smaller than the angle of inclination (α) of the pipe neck (3).

4. Filter (1) according to any one of the preceding claims, **characterised in that** the sleeve (9) has a plurality of regions having angles of inclination (α₁, α₂) with respect to the axis (6) of the pipe neck (3) that are different from one another and/or having radii that are different from one another.

5. Filter (1) according to any one of the preceding claims, **characterised in that** the sleeve (9) has an inwardly directed curve in the region of the front side (12).

6. Filter (1) according to any one of the preceding claims, **characterised in that** between the angle of inclination (β) of the sleeve (9) and the angle of inclination (α) of the end region (4) of the pipe neck (3) there is a difference in angle of between approximately 0.1° and approximately 15°, preferably between approximately 2° and approximately 8°, especially preferably between approximately 3° and approximately 5°, most preferably approximately 4°

7. Filter (1) according to any one of the preceding claims, **characterised in that** the carrier pipe (2) has a preferably circumferential shaft shoulder (5) as stop for the sleeve (9), against which the sleeve (9) rests in the axial direction on its side remote from the front side (12).

8. Filter (1) according to any one of the preceding claims, **characterised in that** as an additional connection between the sleeve (9), the filter element (8) and the pipe neck (3) there is provided at least one bonded connection, preferably in the form of at least one spot weld.

9. Filter (1) according to any one of the preceding claims, **characterised in that** the filter element (8), the sleeve (9), the carrier pipe (2) the pipe neck (3) are formed in a metal material, especially steel, preferably high-grade steel.

10. Filter (1) according to any one of the preceding claims, **characterised in that** the filter element (8), the sleeve (9), the carrier pipe (2) and/or the pipe neck (3) have different thermal expansion properties.

11. Filter (1) according to any one of the preceding claims, **characterised in that** the filter element (8) is made substantially of a non-woven metal fabric.

12. Filter (1) according to any one of the preceding claims, **characterised in that** the filter element (8) is of single-layered or multi-layered construction in the form of a woven material, weft-knitted material and/or warp-knitted material, preferably made of metal wires.

13. Filter (1) according to any one of the preceding claims, **characterised in that** the filter element (8) is arranged on a support grid made of metal, especially a perforated metal sheet.

14. Method of inserting a filter element (8) into a fluid-conducting pipeline, the pipeline comprising:
a carrier pipe (2) having a pipe neck (3), which pipe neck (3) has an end region (4), which end region (4) is conical in shape and the wall of which at least in some portions runs at an angle (α) inclined with respect to an axis of the pipe neck (3);
a rim terminating the end region (4) of the pipe neck (3), which rim is bent inwards towards the axis of the pipe neck (3) and defines a pipe-opening circumscribed by the rim; and
a planar filter element (8) which is fixed to a front side of the carrier pipe (2), which front side (12) forms a termination of the carrier pipe (2), and which planar filter element covers the pipe-opening of the pipe neck (3) and in the end region (4) of the pipe neck (3) at least in sub-regions rests against the outer surface thereof;
**characterised in that**
a sleeve (9), which, at least in sub-regions of its wall, has an angle of inclination (β) other than zero with respect to the axis of the pipe neck (3), which angle of inclination (β) is different from than the angle of inclination (α) of the end region (4) of the pipe neck (3), is mounted axially on the end region (4) of the pipe neck (3) and on the filter element (8) covering the end region (4) of the pipe neck (3), so that it forms over the circumference a number of contact points (10) with the filter element (8) and, as a consequence of the resulting compression, a radial force F is exerted on the end region (4) of the pipe neck (3) and on the filter element (8) resting against the outer surface of the pipe neck (3) in the end region (4) thereof,
wherein the sleeve is mounted in such a way that there is an air-gap (11) between the sleeve (9) and the filter element (8), at least in sub-regions of the circumference, which air-gap opens from the contact points (10) in the direction towards the front side (12).

15. Method according to claim 14, **characterised in that**, on mounting, the sleeve (9), in the axial direction on its side remote from the front side, is arranged against a preferably circumferential shaft shoulder (5) of the carrier pipe (2).

## Revendications

1. Filtre (1) destiné à être inséré dans une conduite de transport de fluide, comprenant :
un tube porteur (2) comportant un raccord de tube (3), lequel raccord de tube présente une zone d'extrémité (4), laquelle zone d'extrémité (4) est de forme conique et dont la paroi s'étend au moins sur certaines parties selon un angle (α) incliné par rapport à un axe (6) du raccord de tube (3) ;
un bord (7) faisant suite à la zone d'extrémité (4) du raccord de tube (3), qui est replié vers l'intérieur en direction de l'axe (6) du raccord de tube (3) et définit une ouverture de tube délimitée par le bord (7) ;
un élément filtrant plat (8) qui est fixé à une face avant (12) du tube porteur (2), laquelle face avant (12) forme une terminaison du tube porteur (2), qui recouvre l'ouverture de tube du raccord de tube (3) et s'appuie, dans la zone d'extrémité (4) du raccord de tube (3), au moins dans certaines zones sur sa surface extérieure ; et
un manchon (9) disposé dans la zone d'extrémité (4) du raccord de tube (3), lequel manchon (9) présente sur sa circonférence un certain nombre de points de contact (10) avec l'élément filtrant (8),
**caractérisé en ce**
**qu'**il existe entre le manchon (9) et l'élément filtrant (8), au moins dans des zones partielles de la circonférence, un espace d'air (11) qui s'ouvre des points de contact (10) vers la face avant (12).

2. Filtre (1) selon la revendication 1, **caractérisé en ce que** le manchon (9) présente, au moins dans des zones partielles de sa paroi, un angle d'inclinaison (β) non nul par rapport à l'axe (6) de raccord de tube (3), qui est différent de l'angle d'inclinaison (α) de la zone d'extrémité (4) du raccord de tube (3).

3. Filtre (1) selon la revendication 1 ou 2, **caractérisé en ce que** l'angle d'inclinaison (β) du manchon (9) est inférieur à l'angle d'inclinaison (α) du raccord de tube (3).

4. Filtre (1) selon l'une des revendications précédentes, **caractérisé en ce que** le manchon (9) présente plusieurs zones avec des angles d'inclinaison (α₁, α₂) différents les uns des autres par rapport à l'axe (6) du raccord de tube (3) et/ou avec des rayons différents les uns des autres.

5. Filtre (1) selon l'une des revendications précédentes, **caractérisé en ce que** le manchon (9) présente une courbure dirigée vers l'intérieur dans la zone de la face avant (12).

6. Filtre (1) selon l'une des revendications précédentes, **caractérisé en ce qu'**il existe une différence d'angle entre environ 0,1° et environ 15°, de préférence entre environ 2° et environ 8°, particulièrement de préférence entre environ 3° et environ 5°, tout particulièrement de préférence d'environ 4°, entre l'angle d'inclinaison (β) du manchon (9) et l'angle d'inclinaison (α) de la zone d'extrémité (4) du raccord de tube (3).

7. Filtre (1) selon l'une des revendications précédentes, **caractérisé en ce que** le tube porteur (2) présente un épaulement ondulé (5) de préférence circonférentiel comme butée pour le manchon (9), contre lequel le manchon (9) s'appuie de préférence dans la direction axiale sur son côté opposé à la face avant (12).

8. Filtre (1) selon l'une des revendications précédentes, **caractérisé en ce qu'**au moins une liaison par coopération de matières, de préférence sous la forme d'au moins un point de soudure, est prévue comme liaison supplémentaire entre le manchon (9), l'élément filtrant (8) et le raccord de tube (3).

9. Filtre (1) selon l'une des revendications précédentes, **caractérisé en ce que** l'élément filtrant (8), le manchon (9), le tube porteur (2) et le raccord de tube (3) sont réalisés dans un matériau métallique, en particulier en acier, de préférence en acier inoxydable.

10. Filtre (1) selon l'une des revendications précédentes, **caractérisé en ce que** l'élément filtrant (8), le manchon (9), le tube porteur (2) et/ou le raccord de tube (3) présentent des propriétés de dilatation thermique différentes.

11. Filtre (1) selon l'une des revendications précédentes, **caractérisé en ce que** l'élément filtrant (8) est essentiellement fabriqué à partir d'un non-tissé métallique.

12. Filtre (1) selon l'une des revendications précédentes, **caractérisé en ce que** l'élément filtrant (8) est fabriqué en une ou plusieurs couches sous la forme d'un tissu, d'un tricot et/ou d'un tulle, de préférence à partir de fils métalliques.

13. Filtre (1) selon l'une des revendications précédentes, **caractérisé en ce que** l'élément filtrant (8) est disposé sur une grille de support en métal, en particulier une tôle perforée.

14. Procédé d'insertion d'un élément filtrant (8) dans une conduite de transport de fluide, la conduite comprenant :
un tube porteur (2) comportant un raccord de tube (3), lequel raccord de tube présente une zone d'extrémité (4), laquelle zone d'extrémité (4) est de forme conique et dont la paroi s'étend au moins sur certaines parties selon un angle (α) incliné par rapport à un axe du raccord de tube (3) ;
un bord faisant suite à la zone d'extrémité (4) du raccord de tube (3), qui est replié vers l'intérieur en direction de l'axe du raccord de tube (3) et définit une ouverture de tube délimitée par le bord ;
un élément filtrant plat (8) qui est fixé à une face avant du tube porteur (2), laquelle face avant forme une terminaison du tube porteur (2), qui recouvre l'ouverture de tube du raccord de tube (3) et s'appuie, dans la zone d'extrémité (4) du raccord de tube (3), au moins dans certaines zones sur sa surface extérieure ;
**caractérisé en ce**
**qu'**un manchon (9) qui présente, au moins dans des zones partielles de sa paroi, un angle d'inclinaison (β) non nul par rapport à un axe du raccord de tube (3), qui est différent de l'angle d'inclinaison (α) de la zone d'extrémité (4) du raccord de tube (3), est appliqué axialement sur la zone d'extrémité (4) du raccord de tube (3) et sur l'élément de filtre (8) qui recouvre la zone d'extrémité (4) du raccord de tube (3), de telle sorte qu'il forme sur la circonférence un certain nombre de points de contact (10) avec l'élément filtrant (8) et que la compression résultante exerce une force radiale F sur la zone d'extrémité (4) du raccord de tube (3) et sur l'élément filtrant (8) qui s'appuie contre la surface extérieure du raccord de tube (3) dans sa zone d'extrémité (4),
le manchon étant appliqué de telle sorte qu'il existe entre le manchon (9) et l'élément filtrant (8), au moins dans des zones partielles de la circonférence, un espace d'air (11) qui s'ouvre des points de contact (10) vers la face avant (12).

15. Procédé selon la revendication 14, **caractérisé en ce que**, lorsque le manchon (9) est appliqué dans la direction axiale sur son côté opposé à la face avant, il est disposé contre un épaulement ondulé (5), de préférence circonférentiel, du tube porteur (2).
